# EUROPEAN PATENT SPECIFICATION

(11) **EP 2 285 518 B1**
(45) Date of publication and mention of the grant of the patent: **15.07.2015**
(21) Application number: 09742929.4
(22) Date of filing: 28.04.2009
(51) Int. Cl.: B23D 43/04, B23C 5/08, B23D 61/06

(54) **CUTTING TOOL WITH CUTTING INSERT HAVING MULTIPLE CUTTING EDGES, AND CUTTING INSERT THEREFOR**
SCHNEIDEWERKZEUG MIT SCHNEIDEEINSATZ MIT MEHREREN SCHNEIDEKANTEN SOWIE SCHNEIDEEINSATZ DAFÜR
OUTIL DE COUPE AVEC INSERT DE COUPE AYANT DE MULTIPLES ARÊTES DE COUPE, ET INSERT DE COUPE POUR CELUI-CI

(30) Priority: 06.05.2008 SE 0801005
(43) Date of publication of application: 23.02.2011
(73) Proprietor: Seco Tools AB, 737 82 Fagersta (SE)
(72) Inventor: SCANDRIOGLIO, Emilio, I-20025 Legnano (MI) (IT); BERNARDINELLI, Pietro, I-22074 Lomazzo-Como (IT); KOSKINEN, Jorma, S-737 33 Fagersta (SE); HESSLERYD, Lars-Martin, S-731 32 Köping (SE)
(74) Representative: Hägglöf, Henrik
(86) International application number: PCT/SE2009/050451
(87) International publication number: WO 2009/136847

(56) References cited:
- CA-A- 524 942
- CH-A- 343 207
- DE-A1- 10 238 451
- DE-A1- 19 901 208
- DE-C- 677 993
- FR-A1- 2 341 392
- FR-E- 71 010
- GB-A- 344 262
- GB-A- 956 479
- US-A- 869 574
- US-A- 1 278 630
- US-A- 2 394 035
- US-A- 2 829 632
- US-A- 3 812 755
- US-A- 5 094 135
- US-A- 5 761 981
- US-A- 6 158 324
- US-B1- 6 834 573

## Description

### BACKGROUND AND SUMMARY

The present invention relates to cutting tools with multiple cutting edges thereon and, more particularly, to cutting tools with cutting inserts having multiple cutting edges thereon.

Rotating tools such as pipe cutters and reciprocating tools such as broaches typically have a large number of cutting edges thereon, arranged one after the other in a direction of cutting. Typically, inserts having a single or plural cutting edges are brazed onto a toolholder. When the cutting edges become dull, it is necessary to remove them from the toolholder, sharpen them or replace them, and then rebraze them onto the toolholder. It is desirable to provide a means for replacing or repairing cutting inserts on a cutting tool having a large number of cutting edges thereon. GB956479, on which the preambles of claims 1 and 9 are based, discloses a saw blade with a replaceable insert having multiple cutting edges thereon.

According to an aspect of the present invention, an L-shaped cutting insert according to claim 1 is provided, which comprises a top side on a first leg of the insert, the top side comprising a plurality of cutting edges, the cutting edges being arranged one after another in a longitudinally axial direction of the insert and extending substantially perpendicularly to a longitudinal, vertical axial plane, and a side wall forming a second leg of the insert and extending downwardly relative to a plane of the top side of the insert, the side wall comprising a side supporting surface for supporting the insert against a side abutment surface of a toolholder and a clamping surface for being contacted by a clamp to clamp the side supporting surface against the side abutment surface wherein the first leg of the insert comprises a bottom supporting surface for supporting the insert against a bottom abutment surface of a toolholder, wherein the side wall is offset to one side of the vertical axial plane, towards the second, opposite side wall of the second leg of the insert.

According to another aspect of the present invention, a cutting tool according to claim 9 is provided, which comprises a cutting insert according to one of the claims 1 to 8, the insert comprising a top side comprising a plurality of cutting edges, the cutting edges being arranged one after another in a longitudinally axial direction of the insert and extending substantially perpendicularly to a longitudinal, vertical axial plane of the insert, and a side wall extending downwardly relative to a plane of the top side of the insert, the side wall comprising a side supporting surface. The cutting tool comprises a toolholder, the toolholder comprising a side abutment surface against which the side supporting surface of the insert is adapted to be supported, and a clamp for clamping the side supporting surface of the insert against the side abutment surface of the toolholder, wherein each insert comprises a bottom wall comprising a bottom supporting surface for supporting the insert against a bottom abutment surface of the toolholder. The side wall is offset to one side of the vertical axial plane, towards the second, opposite side wall of the second leg of the insert.

### BRIEF DESCRIPTION OF THE DRAWINGS

The features and advantages of the present invention are well understood by reading the following detailed description in conjunction with the drawings in which like numerals indicate similar elements and in which:
FIG. 1 is a side view of a cutting tool according to an embodiment of the present invention;
FIG. 2 is a top view of a cutting tool according to an embodiment of the present invention;
FIG. 3 is an enlarged view of a portion of a cutting tool according to FIG. 1;
FIG. 4 is an exploded, perspective view of a portion of a cutting tool according to FIG. 1;
FIG. 5 is a perspective view of a cutting tool according to an embodiment of the present invention;
FIG. 6 is an exploded, perspective view of a cutting tool as seen in FIG. 5;
FIG. 7 is a side view of a cutting tool according to an embodiment of the present invention;
FIG. 8 is an enlarged, side view of a portion of a cutting tool according to FIG. 7;
FIG. 9 is a partially cross-sectional, schematic, perspective view of a portion of a cutting tool including a clamping arrangement according to an embodiment of the present invention;
FIG. 10 is a side, schematic view of a portion of a cutting tool including a clamping arrangement according to an embodiment of the present invention;
FIG. 11 is a side, schematic view of a portion of a cutting tool including a clamping arrangement according to an embodiment of the present invention;
FIG. 12 is a side, schematic view of a portion of a cutting tool with cutting edges arranged at increasing heights relative to preceding cutting edges according to an embodiment of the present invention;
FIG. 13 is a side, schematic view of a portion of a cutting tool with cutting edges arranged at increasing heights relative to preceding cutting edges according to an embodiment of the present invention;
FIG. 14 is a side, schematic view of a portion of a cutting tool with cutting edges arranged at increasing heights relative to preceding cutting edges according to an embodiment of the present invention;
FIG. 15 is a side, schematic view of a portion of a cutting tool with cutting inserts arranged at different angles relative to radii of a circular tool according to an embodiment of the present invention;
FIG. 16 is a schematic, bottom perspective view of a cutting insert according to an embodiment of the present invention;
FIGS. 17A and 17B are side and top views of a cutting insert according to an embodiment of the present invention, FIG. 17C is an end view taken at section 17C-17C of FIG. 17A, FIG. 17D is a cross-sectional view taken at section 17D-17D of FIG. 17A, FIG. 17E is a cross-sectional view taken at section 17E-17E of FIG. 17A, and FIG. 17F is an enlargement of a portion of the insert of FIG. 17A;
FIGS. 18A and 18B are end views of portions of cutting edges on an insert according to an embodiment of the present invention.

### DETAILED DESCRIPTION

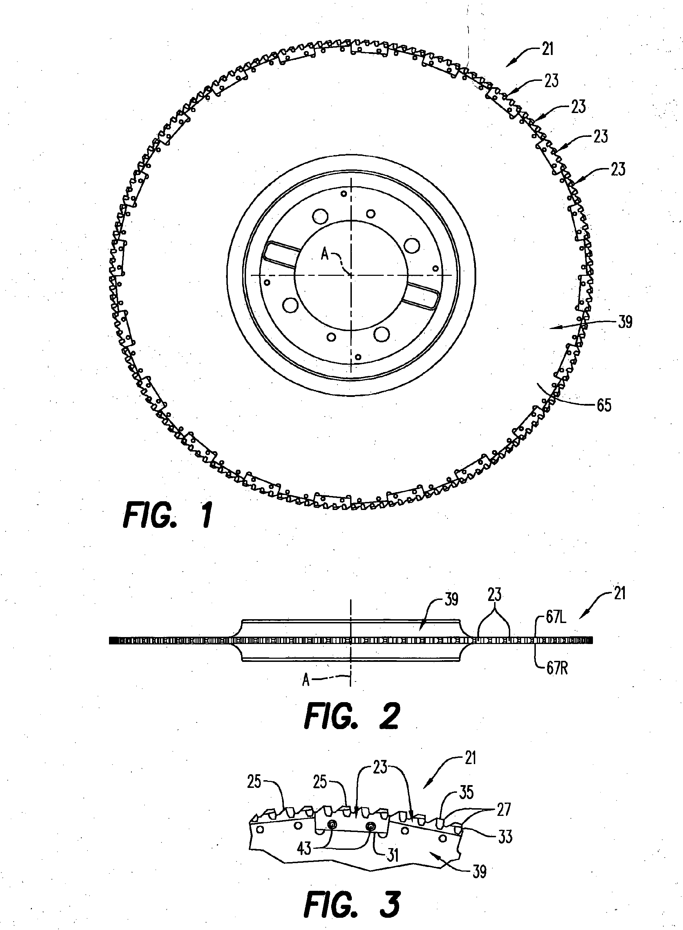

A cutting tool 21 according to an aspect of the present invention is seen in FIGS. 1-4. The cutting tool 21 includes a cutting insert 23 and, ordinarily, a plurality of cutting inserts. At least some of the cutting inserts 23 are ordinarily, but not necessarily, identical to one another.

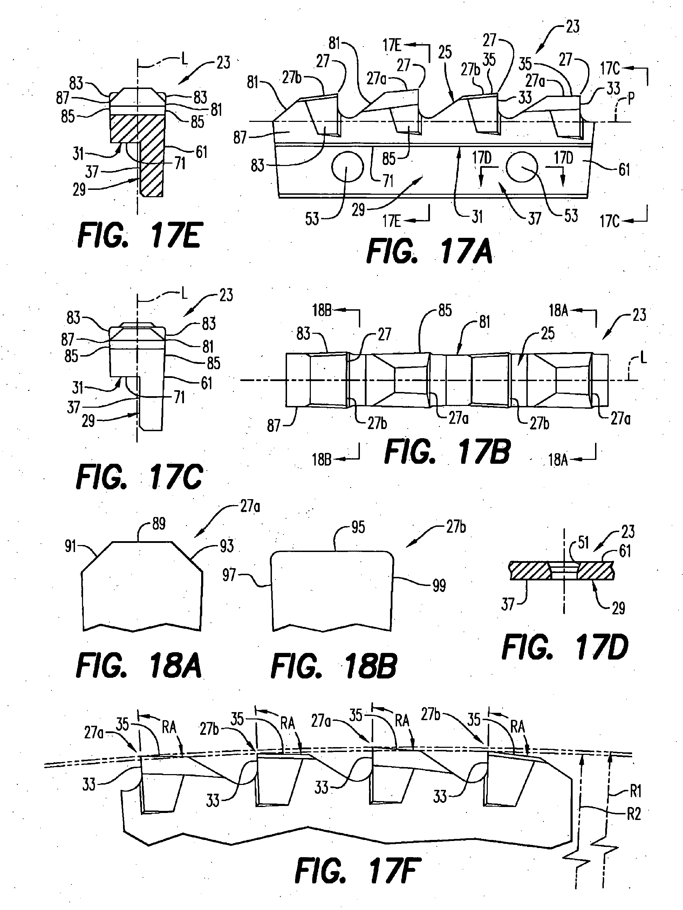

As seen with reference to the exemplary insert 23 shown in FIGS. 17A-17F, the inserts 23 each comprise a top side 25 comprising a plurality of cutting edges 27. The cutting edges 27 are arranged one after another in a longitudinally axial direction of the insert 23 and extend substantially perpendicularly to a longitudinal, vertical axial plane L (FIGS. 17B, 17C, 17E) of the insert. A side wall 29 extends substantially perpendicularly relative to a plane P of the top side 25 of the insert. The plane P of the top side 25 is ordinarily an imaginary plane that can be taken at some arbitrary point relative to the top side, such as extending through an uppermost one of the cutting edges and parallel to a bottom surface 31 of the insert. As seen, for example, in the enlarged view of FIG. 3 (showing an enlarged view of a portion of the cutting tool 23 shown in FIG. 1), the top side 25 is not, however, ordinarily planar as the cutting edges 27 and associated rake surfaces 33 (FIG. 17F) and clearance surfaces 35 (FIG. 17F) for each cutting edge define a non-planar geometry. The side wall 29 comprises a side supporting surface 37.

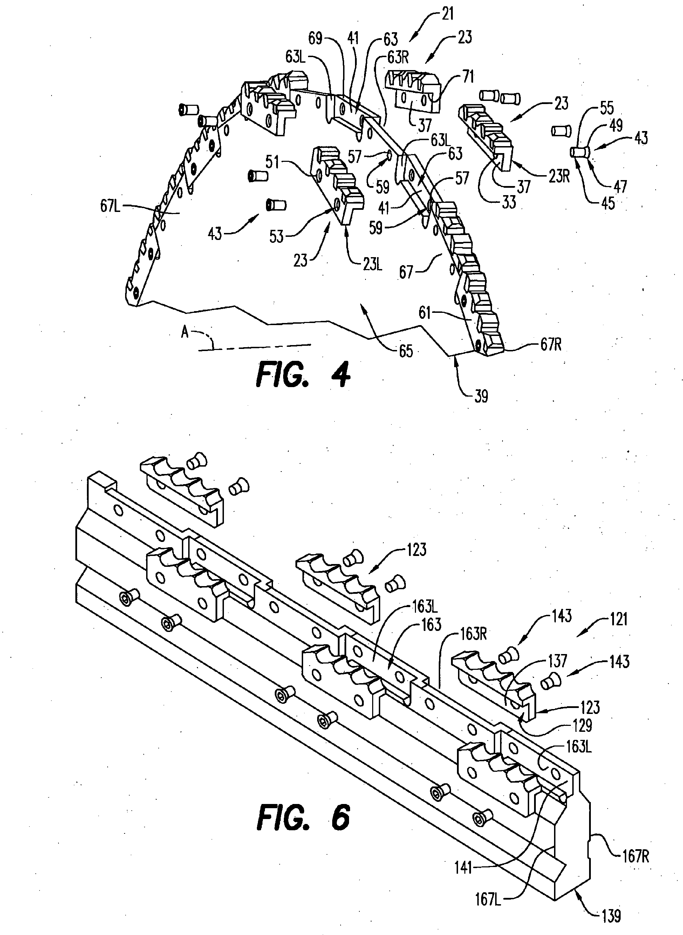

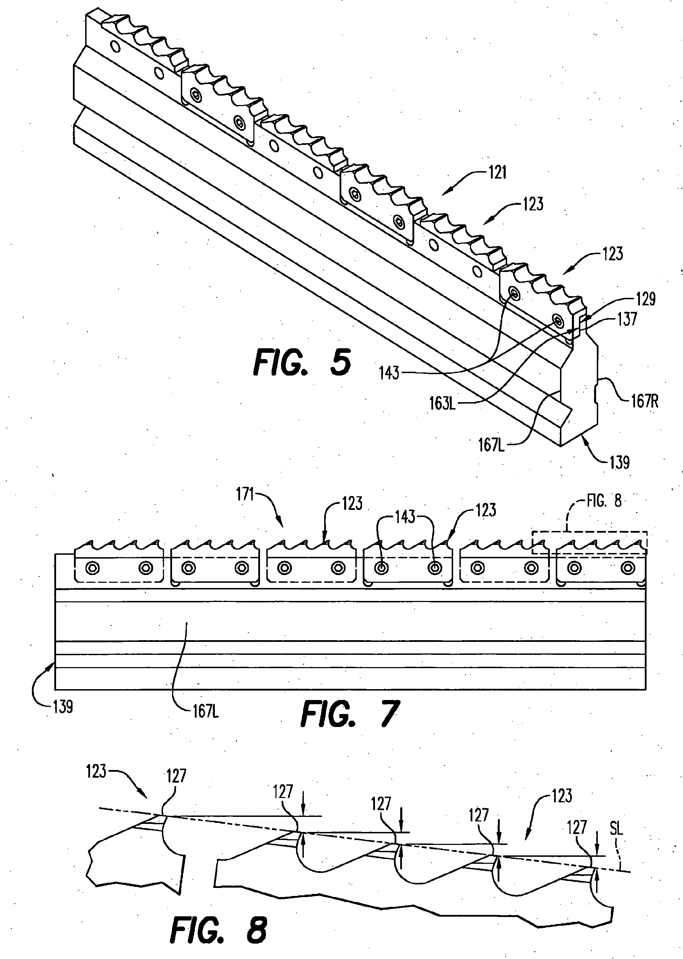

As seen with reference to FIGS. 1-4, a toolholder 39 is provided and comprises a side abutment surface 41 (FIG. 4) against which the side supporting surface 37 of the insert 23 is adapted to be supported. In the present application, a "supporting surface" will be considered to be a surface of the insert, while an "abutment surface" will be considered to be a surface of a toolholder that the supporting surface abuts. In the cutting tool 21 of FIGS. 1-4, the cutting tool is a rotary disk-type of cutting tool (specifically, a pipe-cutter) with inserts 23 arranged around a circumference of the toolholder 39. It will be appreciated, however, that the present invention has applications in a wide variety of cutting tool applications. FIGS. 5-8, for example, show a cutting tool 121 in the form of a pull broaching tool.

With reference to the exemplary tool of FIGS. 1-4, a clamp 43 is provided for clamping the side supporting surface 37 of the insert 23 against the side abutment surface 41 of the toolholder 39. In the tool shown in FIGS. 1-4, and in the tool shown in FIGS. 5-8, as seen in FIG. 4, the clamp 43 comprises a screw 45 having an enlarged head 47 with a surface 49 that abuts a clamping surface 51 in a through hole 53 in the insert 23 and that has external threads 55 that mate with internal threads 57 formed in a hole 59 in the side abutment surface 41 of the toolholder 39 to apply a force against the clamping surface in the through hole in a direction perpendicular to the longitudinal, vertical axial plane of the insert 23.

In the insert 23 of the exemplary tool of FIGS. 1-4, as seen, for example, in FIGS. 17C and 17E, the side wall 29 extends substantially parallel to the longitudinal, vertical axial plane of the insert 23 and the clamp 43 (e.g., FIG. 4) is adapted to apply a clamping force in a direction substantially perpendicular to the longitudinal, vertical axial plane of the insert. As seen, for example, with reference to FIG. 4, a side abutment surface 41 can extend substantially perpendicular to a rotational axis A of the toolholder 39, as does the side supporting surface 37 when the insert 23 is mounted on the toolholder.

In the exemplary tool of FIGS. 5-8, as with the insert 23, in the insert 123, the side wall 129 (FIG. 6) extends substantially parallel to the longitudinal, vertical axial plane of the insert 123 and, when the insert is mounted on the toolholder 139, the clamp 143 is adapted to apply a clamping force in a direction substantially perpendicular to the longitudinal, vertical axial plane of the insert. As seen, for example, in FIG. 6, the side abutment surface 141 extends substantially parallel to a longitudinal, vertical axial plane of the toolholder 139, as does the side supporting surface 137 when the insert 123 is mounted on the toolholder.

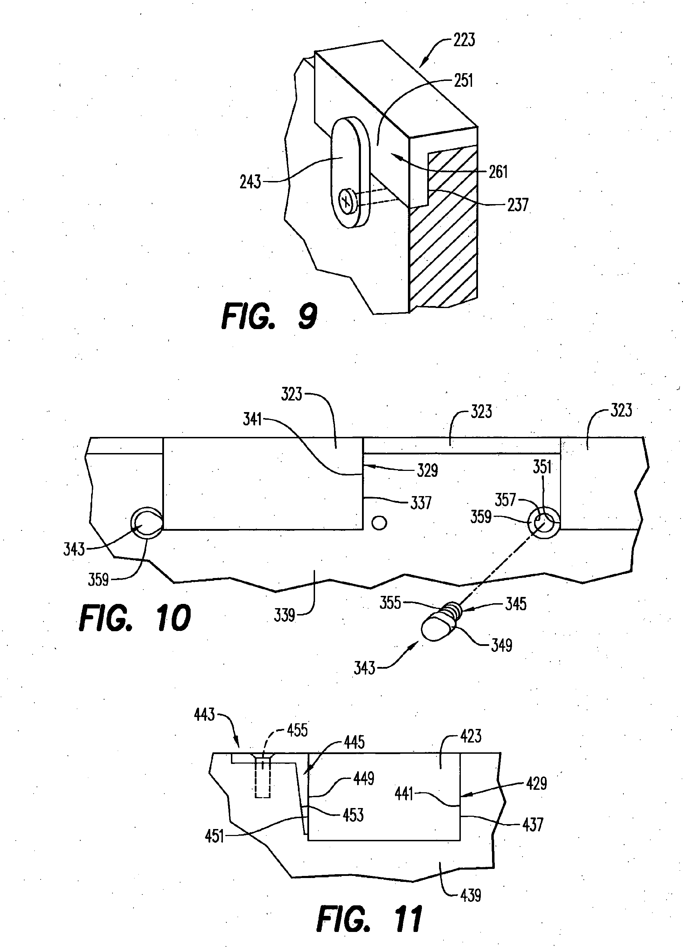

Various types of clamps can be provided other than the types shown in FIGS. 1-8. For example, in FIG. 9, another type of clamping arrangement is shown wherein a clamping arm 243 contacts a clamping surface 251 on a side 261 of an insert 223 opposite the insert supporting surface 237, wherein the side 261 is substantially parallel with a longitudinal, vertical axial plane of the insert 223 and the force applied by the clamping arm 243 is substantially perpendicular to the longitudinal, vertical axial plane of the insert.

FIG. 10 shows yet another type of clamp 343 comprising a screw 345 with a cam surface 349 that abuts a clamping surface 351 of the insert 323 that is opposite the insert supporting surface 337. The screw 345 can include external threads 355 that mate with internal threads 357 formed in a hole 359 in the toolholder 339 and the cam surface 349 can apply a clamping force when the screw 345 is turned in the hole. The side surface 329 and the insert supporting surface 337 and the abutment surface 341 in this exemplary aspect are substantially perpendicular to a longitudinal, vertical axial plane of the insert 323 and the toolholder 339 and the cam surface 349 applies the force in a direction substantially parallel to the longitudinal, vertical axial plane of the insert and the toolholder to clamp the insert supporting surface 337 against the abutment surface 341.

FIG. 11 shows yet another type of clamp 443 comprising a wedge 445 with a surface 449 that abuts a clamping surface 451 of the insert 423 that is opposite side wall 429 and the insert supporting surface 437 when the wedge is forced between the clamping surface and a surface 453 of the toolholder 439, such as by being forced down by tightening a screw 455 (shown in phantom) so as to clamp the insert supporting surface 437 against an abutment surface 441 of the toolholder. The wedge 445 may form part of an adjacent insert.

With reference to the exemplary tool 21 of FIGS. 1-4, it will be seen that the side abutment surface 41 is ordinarily offset from a side wall 67 of the toolholder, ordinarily by being disposed in a recess 63 in a body 65 of the toolholder 39 as seen in FIG. 4. A second side wall 61 opposite the side wall 29 of the insert 23 will ordinarily be substantially flush with or recessed relative to a side surface 67 of the toolholder when the side supporting surface 37 of the insert contacts the side abutment surface in the recess in the body of the toolholder.

Ordinarily, the tool 21 will comprise a plurality of inserts 23 mounted against a corresponding plurality of side abutment surfaces 41 in a corresponding plurality of recesses 63. As seen, for example, in the tools 21 and 121 shown in FIGS. 4 and 6, the toolholder 39 and 139 ordinarily comprises left and right faces 67L and 67R and 167L and 167R. At least one of the plurality of recesses 63L and 163L is formed in the left face 67L and 167L and at least one of the plurality of recesses 63R and 163R is formed in the right face 67R and 167R.

The inserts that are received in the left and right recesses are ordinarily configured for use in one or the other of the recesses. For example, in the tool 21 of FIGS. 1-4, the inserts 23 comprise (as seen in FIG. 4) left mounting inserts 23L and right mounting inserts 23R for the left and right recesses 67L and 67R, respectively, for cutting by turning the tool in a clockwise direction. However, if it is desired that the tool 21 be operated in a counterclockwise direction, the left and right inserts 23L and 23R can be turned around and installed in the right and left recesses 67R and 67L, respectively. 39. On a given tool, such as the tool 21, ordinarily, at least two of the plurality of inserts 23 are identical to each other. Typically, the inserts of a first approximate half 23L of the plurality of inserts 23 are identical to one another, and the inserts of a remaining second approximate half 23R of the plurality of inserts 23 are identical to one another, the individual inserts of the remaining second approximate half of the plurality of inserts being substantially mirror images of the individual inserts of the first approximate half of the plurality of inserts.

Likewise, for a tool 121 as shown in FIGS. 5-8, there may be circumstances in which it will be desirable to mount the inserts one way in the recesses for cutting in one direction, and to mount the inserts another way in the recesses for cutting in another direction. However, in a tool 121, which can be used as a broaching tool, successive ones of the recesses 167 are ordinarily arranged slightly higher than preceding ones of the recesses relative to the plane P of the top side 125 so that, as seen in FIG. 8, successive cutting edges 127 of identical inserts 123 will be substantially continuously higher than preceding cutting edges in a direction of cutting, ordinarily such that each successive cutting edge falls on a substantially straight line SL (shown in phantom in FIG. 8).

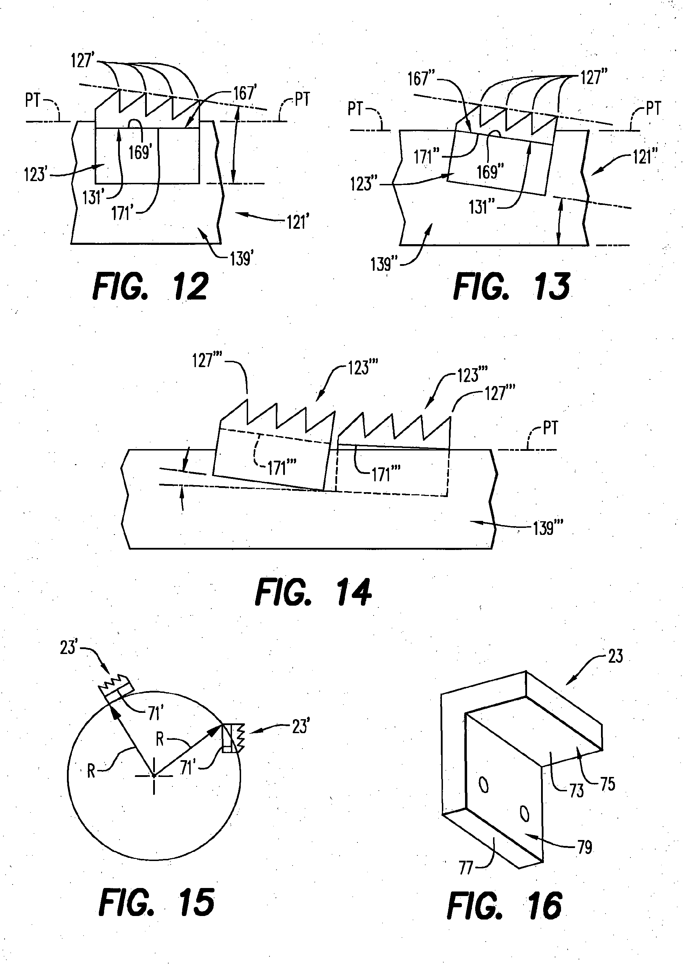

One way of causing successive cutting edges 127' to be higher than preceding cutting edges is by forming the inserts 123' so that successive ones of the cutting edges 127' are higher relative to the bottom 131' of the insert than preceding ones of the cutting edges, and securing the insert relative to the toolholder 139' so that the bottom 131' is parallel to a direction of travel of the tool 121', as seen in exaggerated form in FIG. 12. For example, the bottom supporting surface 171' of the bottom surface 131' can be flat and can abut a flat bottom abutment surface 169' of a recess 167' that is parallel to the direction of travel of the tool 121' (usually parallel to a top plane PT of the toolholder 139').

Another way of causing successive cutting edges 127" to be higher than preceding cutting edges is by forming the inserts 123" so that successive ones of the cutting edges are at the same height relative to the bottom 131" of the insert as preceding ones of the cutting edges, and securing the insert relative to the toolholder 139" so that the bottom supporting surface 171" of the bottom surface 131" is tilted relative to a direction of travel of the tool 121", as seen in exaggerated form in FIG. 13. For example, the bottom surface 131" can be flat and the bottom supporting surface 171" can abut a flat bottom abutment surface 169" of a recess 167" that forms a non-zero angle with the direction of travel of the tool (usually parallel to a top plane PT of the toolholder 139").

As seen in FIG. 14, in other exemplary embodiments of the tool 121"', the bottom supporting surfaces 171"' of different inserts 123"' can define different angles with a top plane PT of the toolholder 139"'. The inserts 123"' can have cutting edges 127"' that are disposed at different distances from the bottom supporting surfaces 171"' and/or the same distances.

In the exemplary tool 21 of FIGS. 1-4, each insert 23 comprises a bottom wall 31 comprising a bottom supporting surface 71 for supporting the insert against a bottom abutment surface of the toolholder. Ordinarily, the bottom supporting surfaces 71 of different inserts will define the same angles with radii of the toolholder that intersect the bottom supporting surfaces at forward ends of the bottom supporting surfaces. However, as seen in FIG. 15, the bottom supporting surfaces 71' of different inserts 23' can define different angles with radii R of the toolholder that intersect the bottom supporting surfaces of the inserts.

In the exemplary inserts shown in FIGS. 1-8, the inserts are L-shaped. As seen in FIG. 16, the bottom supporting surfaces of such inserts may be on the upper part 73 of the bottom leg 75 of the "L", or at the top 77 of the upper leg 79 of the "L". In the embodiments illustrated in the present application, the bottom supporting surfaces are shown as being on the upper part of the bottom leg of an L-shaped insert.

An exemplary cutting insert 23 is seen in FIGS. 17A-17F. The insert 23 comprises a top side 25 comprising a plurality of cutting edges 27 (in this embodiment, four cutting edges). The cutting edges 27 are arranged one after another in a longitudinally axial direction of the insert and extend substantially perpendicularly to the longitudinal, vertical axial plane of the insert. The side wall 29 extends downward, ordinarily substantially perpendicularly, relative to a plane P of the top side 25 of the insert 23. The side wall 29 comprises a side supporting surface 37 for supporting the insert 23 against a side abutment surface 41 (e.g., FIGS. 1-4) of a toolholder.

A bottom wall or surface 31 comprises a bottom supporting surface 71 for supporting the insert against a bottom abutment surface 69 (e.g., FIG. 4) of the toolholder. The illustrated insert 23 shows the bottom wall 31 and bottom supporting surface 71 on the upper part 73 (FIG. 16) of the bottom leg 75 (FIG. 16) of the L-shaped insert, however, the bottom supporting surface can be at the top 77 (FIG. 16) of the upper leg 79 (FIG. 16) of the "L" shaped insert. Ordinarily, at least one and generally two through holes 53 extends through the side wall 29 of the insert 23. As seen in FIG. 17D, the through hole 53 typically comprises a clamping surface 51 in the form of a surface that forms an angle relative to an axis of the through hole. A screw head 47 (e.g., FIGS. 1-4) can abut the clamping surface 51 to assist in clamping the insert 23 relative to a toolholder. A second side wall 61 opposite the side wall 29 is provided. The clamping surface 51 can form part of the through hole 53 extending inwardly from the second side wall 61. Ordinarily, the side wall 29 and the second side wall 61 are substantially flat and parallel. In the insert of FIGS. 17A-17F, the second side wall 61 extends down substantially from an axially extending edge 81 of the top side 25, although portions 83 and 85 of the cutting edges 27 may extend outwardly from the second side wall as seen in, for example, FIG. 17A.

As seen, for example, in FIGS. 17C and 17E, the insert 23 can be "L" shaped. The side wall 29 can be offset closer to the longitudinal, vertical axial plane of the insert 23 than either axially extending edge 81 or 87 of the top side. In the illustrated insert 23, the side wall is offset to a right side of the longitudinal, vertical axial plane L of the insert. Such an insert corresponds to the inserts 23R shown in FIG. 4. An insert 23L of FIG. 4 would have the side wall offset to a left side of the longitudinal, vertical axial plane of the insert.

In the exemplary insert 23 of FIGS. 17A-17F, at least two of the cutting edges 27 have different profiles. Specifically, as seen, for example, in FIG. 18A, two of the cutting edges 27a of the insert 23 of FIGS. 17A-17F have a top component 89 and left and right side components 91 and 93 that form angles of approximately 45° with the top component. As seen in FIG. 18B, two other cutting edges 27b have a top component 95 with left and right side components 97 and 99 that are perpendicular or nearly perpendicular to the top component.

The top parts of at least two of the cutting edges 27a and 27b can be disposed at different distances from the bottom surface 31 of the insert 23. For example, as seen in the portion of the insert 23 shown FIG. 17F, uppermost parts 89 of at least two of the cutting edges 27a are disposed on a first radius R1 and uppermost parts 95 of at least two others of the cutting edges 27b are disposed on a second radius R2.

By providing a cutting edge 27a that is higher at the top part 89 but shorter along the top part than the top part 95 of the cutting edge 27b, it is possible to avoid excessive force on any single tooth. For example, in forming a substantially square or rectangular groove in a workpiece, if the cutting edge 27a leads the cutting edge 27b into a workpiece, the entire top part 89 and some portion of the left and right side components 91 and 93 can perform a first cutting operation on the workpiece to form a groove with a flat bottomed V-shape, and left and right portions of the top part 95 and the left and right side components 97 and 99 of the second cutting edge 27b can perform a second cutting operation on the workpiece to form the groove into more of a square or rectangular shape. The insert 23 is of a type that would ordinarily be used on a rotary cutting tool 21 such as is shown in FIGS. 1-4, and the radii R1 and R2 upon which the top portions 89 and 95 lie will ordinarily extend from a center of the tool. The insert 123 shown in FIGS. 5-8 is shown with four substantially square-shaped cutting edges 127, however, these edges can be formed in the manner of the cutting edges 27a and 27b of the insert 23 to reduce stresses on individual ones of the inserts. Instead of forming the insert 123 so that the cutting edges 127 fall on different radii, the cutting edges might be configured at different heights relative to a bottom surface 131 of the insert.

For each cutting edge 27, a rake surface 33 extends substantially perpendicularly to the longitudinal, vertical axial plane of the insert and is disposed forward of each cutting edge. Each rake surface 33 defines a rake angle RA with the plane P of the top side 25. Even if at least two of the rake surfaces 33 define different rake angles with the plane P of the top side 25 of the insert 23, each rake surface may still define the same rake angle with a curve defined by the radius R1 or R2 of the associated cutting edge 27.

While this invention has been illustrated and described in accordance with a preferred embodiment, it is recognized that variations and changes may be made therein without departing from the invention as set forth in the claims.

## Claims

1. An L-shaped cutting insert (23, 123, 123', 123", 123"', 223, 323, 423), comprising a top side (25) on a first leg of the insert, the top side comprising a plurality of cutting edges (27), the cutting edges being arranged one after another in a longitudinally axial direction of the insert and extending substantially perpendicularly to a longitudinal, vertical axial plane, and a side wall (29, 129, 329, 429) forming a second leg of the insert and extending downwardly relative to a plane (P) of the top side (25) of the insert, the side wall comprising a side supporting surface (37, 137, 237,337,437) for supporting the insert against a side abutment surface (41, 141, 341, 441) of a toolholder (39, 139, 139', 130", 139"', 239, 339, 439) and a clamping surface (51) for being contacted by a clamp (43) to clamp the side supporting surface (37) against the side abutment surface (41, 141, 341,441), the first leg of the insert comprising a bottom supporting surface (71, 71', 171 ', 171 ", 171 "') for supporting the insert against a bottom abutment surface (69, 169', 169", 169"') of a toolholder, **characterized in that** the side wall (29) is offset to one side of the vertical axial plane, towards the second, opposite, side wall (61) of the second leg of the insert.

2. The cutting insert (23, 123, 123', 123", 123"') as set forth in claim 1, **characterized in that** the insert comprises at least one through hole (53) extending through the side wall (29).

3. The cutting insert (23, 123, 123', 123", 123"') as set forth in claim 2, **characterized in that** the clamping surface (51) is at least partially disposed in the through hole (53).

4. The cutting insert (23, 123, 123', 123", 123"', 223, 323, 423) as set forth in any of claims 1-3, **characterized in that** the side wall (29) is offset closer to the longitudinal, vertical axial plane of the insert than an axially extending edge (81, 87) of the top side (25).

5. The cutting insert (23, 123, 123', 123", 123"', 223, 323, 423) as set forth in any of claims 1-4, **characterized in that** at least two of the cutting edges (27) have different profiles.

6. The cutting insert (23, 123, 123', 123", 123"', 223, 323, 423) as set forth in any of claims 1-5, **characterized in that** uppermost parts (89, 95) of at least two of the cutting edges (27a, 27b) are disposed at different distances from a bottom surface (31) of the insert.

7. The cutting insert (23, 123, 123', 123", 123"', 223, 323, 423) as set forth in any of claims 1-6, **characterized in that** uppermost parts (89) of at least two of the cutting edges (27a) are disposed on a first radius (R1) and uppermost parts (95) of at least two others of the cutting edges (27b) are disposed on a second radius (R2).

8. The cutting insert (23, 123, 123', 123", 123"', 223, 323, 423) as set forth in any of claims 1-7, **characterized in that**, for each cutting edge (27) of the plurality of cutting edges, a rake surface (33) extends substantially perpendicularly to the longitudinal, vertical axial plane of the insert and forward of each cutting edge and each rake surface defines a rake angle (RA) with the plane (P) of the top side (25), and wherein at least two of the rake surfaces (33) define different rake angles (RA) with the plane (P) of the top side (25).

9. A cutting tool (21, 121), comprising an L-shaped cutting insert (23, 123, 123', 123", 123"', 223, 323, 423) according to one of the preceding claims, the insert comprising a top side (25) comprising a plurality of cutting edges (27), the cutting edges being arranged one after another in a longitudinally axial direction of the insert and extending substantially perpendicularly to a longitudinal, vertical axial plane of the insert, and a side wall (29, 129, 329,429) extending downwardly relative to a plane (P) of the top side (25) of the insert, **characterized in that** the side wall comprises a side supporting surface (37, 137, 237, 337,437), **in that** the side wall is offset to one side of the vertical axial plane, towards the second, opposite side wall (61) of the second leg of the insert and **in that** a toolholder (39, 139, 139', 130", 139"', 239, 339, 439) is provided, the toolholder comprising a side abutment surface (41, 141, 341, 441) against which the side supporting surface (37, 137, 237, 337, 437) of the insert is adapted to be supported, and that a clamp (43, 143) is provided for clamping the side supporting surface (37, 137, 237, 337, 437) of the insert against the side abutment surface (41,141, 341, 441) of the toolholder, and **in that** each insert (23, 123) comprises a bottom wall (31) comprising a bottom supporting surface (71, 71 ', 171', 171", 171"') for supporting the insert against a bottom abutment surface (69, 169', 169", 169"') of the toolholder.

10. The cutting tool (21, 121) as set forth in claim 9, **characterized in that** the side wall (29, 129) extends substantially parallel to the longitudinal, vertical axial plane of the insert and the clamp (43, 143, 243) is adapted to apply a clamping force in a direction substantially perpendicular to the longitudinal, vertical axial plane of the insert.

11. The cutting tool (21, 121) as set forth in any of claims 9-10, **characterized in that** the side abutment surface (41, 141) extends substantially parallel to a longitudinal, vertical axial plane of the toolholder.

12. The cutting tool (21, 121) as set forth in any of claims 9-11, **characterized in that** the side abutment surface (341, 441) extends substantially perpendicular to a rotational axis of the toolholder.

13. The cutting tool (21, 121) as set forth in any of claims 9-12, **characterized in that** the cutting tool comprises a plurality of inserts (23, 123) mounted against a corresponding plurality of side abutment surfaces (41, 141) in a corresponding plurality of recesses (63, 163).

14. The cutting tool (21, 121) as set forth in any of claims 9-13, **characterized in that** at least two of the bottom supporting surfaces (171 "') define different angles with a top plane (PT) of the toolholder.

## Patentansprüche

1. L-förmiger Schneideinsatz (23, 123, 123', 123", 123"', 223, 323, 423), welcher eine Oberseite (25) auf einem ersten Schenkel des Einsatzes aufweist, wobei die Oberseite eine Mehrzahl von Schneidkanten (27) hat, und die Schneidkanten in einer axialen Längsrichtung des Einsatzes eine hinter der anderen angeordnet sind und sich im Wesentlichen senkrecht zu der in Längsrichtung verlaufenden, vertikalen Axialebene erstrecken, und wobei eine Seitenwand (29, 129, 329, 429) einen zweiten Schenkel des Einsatzes bildet und sich relativ zu einer Ebene (P) der Oberseite (25) des Einsatzes nach unten erstreckt, wobei die Seitenwand eine seitliche Stützfläche (37, 137, 237, 337, 437) aufweist, um den Schneideinsatz an einer seitlichen Anlagefläche (41, 141, 341, 441) eines Werkzeughalters (39, 139, 139', 139", 139"', 239, 339, 439) abzustützen, und mit einer Klemmfläche (51) für den Kontakt (43), um die seitliche Stützfläche (37) an die Anlagefläche (41, 141, 341, 441) zu klemmen, wobei der erste Schenkel des Einsatzes eine untere Stützfläche (71, 71', 171', 171", 171"') für das Abstützen des Einsatzes gegen eine untere Anlagefläche (69, 169', 169", 169"') des Werkzeughalters aufweist, **dadurch gekennzeichnet, dass** die Seitenwand (29) zu einer Seite der vertikalen Axialebene in Richtung der zweiten, entgegengesetzten Seitenwand (61) des zweiten Schenkels des Einsatzes versetzt ist.

2. Schneideinsatz (23, 123, 123', 123", 123"') nach Anspruch 1, **dadurch gekennzeichnet, dass** der Einsatz zumindest eine Durchgangsbohrung (53) hat, die sich durch die Seitenwand (29) hindurch erstreckt.

3. Schneideinsatz (23, 123, 123', 123", 123"') nach Anspruch 2, **dadurch gekennzeichnet, dass** die Klemmfläche (51) zumindest teilweise in der Durchgangsbohrung (53) angeordnet ist.

4. Schneideinsatz (23, 123, 123', 123", 123"',223, 323, 423) nach einem der Ansprüche 1 bis 3, **dadurch gekennzeichnet, dass** die Seitenwand (29) näher zu der vertikalen axialen Längsebene des Einsatzes hin versetzt ist als eine sich axial erstreckende Kante (81, 87) der Oberseite (25).

5. Schneideinsatz (23, 123, 123', 123", 123"',223, 323, 423) nach einem der Ansprüche 1 bis 4, **dadurch gekennzeichnet, dass** zumindest zwei der Schneidkanten (27) unterschiedliche Profile haben.

6. Schneideinsatz (23, 123, 123', 123", 123"',223, 323, 423) nach einem der Ansprüche 1 bis 5, **dadurch gekennzeichnet, dass** die obersten Teile (89, 95) von zumindest zwei der Schneidkanten (27a, 27b) unter unterschiedlichen Abständen von einer unteren Fläche (31) des Einsatzes angeordnet sind.

7. Schneideinsatz (23, 123, 123', 123", 123"',223, 323, 423) nach einem der Ansprüche 1 bis 6, **dadurch gekennzeichnet, dass** die obersten Teile (89) von zumindest zwei der Schneidkanten (27a) auf einem ersten Radius (R1) angeordnet sind und dass die obersten Teile (95) von zumindest zwei weiteren der Schneidkanten (27b) auf einem zweiten Radius (R2) angeordnet sind.

8. Schneideinsatz (23, 123, 123', 123", 123"',223, 323, 423) der Ansprüche 1 bis 7, **dadurch gekennzeichnet, dass** für jede Schneidkante (27) aus der Mehrzahl von Schneidkanten eine Spanfläche (33) sich im Wesentlichen senkrecht zu der vertikalen axialen Längsebene des Einsatzes und zu jeder Schneidkante erstreckt und jede Spanfläche einen Spanwinkel (RA) mit der Ebene (P) der Oberseite (25) definiert, und wobei zumindest zwei der Spanflächen (33) unterschiedliche Spanwinkel (RA) bezüglich der Ebene (P) auf der Oberseite (25) haben.

9. Schneidwerkzeug (21, 121) mit einem L-förmigen Schneideinsatz (23, 123, 123', 123", 123"', 223, 323, 423), nach einem der vorstehenden Ansprüche, wobei der Einsatz eine Oberseite (25) aufweist, die eine Mehrzahl von Schneidkanten (27) hat, wobei die Schneidkanten eine hinter der anderen in einer axialen Längsrichtung des Schneideinsatzes angeordnet sind und sich im Wesentlichen senkrecht zu einer vertikalen, axialen Längsebene des Einsatzes erstrecken, und wobei eine Seitenwand (29, 129, 329, 429) sich relativ zu einer Ebene (P) der Oberseite (25) des Einsatzes nach unten erstreckt, **dadurch gekennzeichnet, dass** die Seitenwand eine seitliche Stützfläche (37, 137, 237, 337, 437) aufweist, dass die Seitenwand (29) bezüglich einer Seite der vertikalen axialen Ebene in Richtung der zweiten, entgegengesetzten Seitenwand (61) des zweiten Schenkels des Einsatzes versetzt ist, und dass ein Werkzeughalter (39, 139, 139', 139", 139"', 239, 339, 439) vorgesehen ist, wobei der Werkzeughalter eine seitliche Anlagefläche (41, 141, 341, 441) aufweist, wobei die seitliche Stützfläche (37, 137, 237, 337, 437) des Einsatzes dafür ausgelegt ist, an dieser Anlagefläche abgestützt zu werden, und dass eine Klemme (43, 143) für das Festklemmen der seitlichen Stützfläche (37, 137, 237, 337, 437) des Einsatzes an der seitlichen Anlagefläche (41, 141, 341, 441) des Werkzeughalters vorgesehen ist, und dass jeder Einsatz (23, 123) eine Bodenwand (31) aufweist, die eine untere Stützfläche (71, 71', 171', 171", 171"') hat, um den Einsatz an einer unteren Anlagefläche (69, 169', 169", 169"') des Werkzeughalters zu haltern.

10. Schneidwerkzeug (21, 121) nach Anspruch 9, **dadurch gekennzeichnet, dass** die Seitenwand (29, 129) sich im Wesentlichen parallel zu der longitudinalen, vertikalen Axialebene des Einsatzes erstreckt, und die Klammer (43, 143, 243) dafür ausgelegt ist, eine Klemmkraft in einer Richtung auszuüben, welche im Wesentlichen senkrecht zu der in Längsrichtung verlaufenden, vertikalen Axialebene des Einsatzes.

11. Schneidwerkzeug (21, 121) nach einem der Ansprüche 9-10, **dadurch gekennzeichnet, dass** die seitlichen Anlageflächen (41, 141) sich im Wesentlichen parallel zu einer in Längsrichtung verlaufenden, vertikalen Axialebene des Werkzeughalters erstreckt.

12. Schneidwerkzeug (21, 121) nach einem der Ansprüche 9-11, **dadurch gekennzeichnet, dass** die seitliche Anlagefläche (341, 441) sich im Wesentlichen senkrecht zu einer Rotationsachse des Werkzeughalters erstreckt.

13. Schneidwerkzeug (21, 121) nach einem der Ansprüche 9-12, **dadurch gekennzeichnet, dass** das Schneidwerkzeug eine Mehrzahl von Einsätzen (23, 123) aufweist, die an einer entsprechenden Mehrzahl von seitlichen Anlageflächen (41, 141) in einer entsprechenden Mehrzahl von Aussparungen (63, 163) montiert sind.

14. Schneidwerkzeug (21, 121) nach einem der Ansprüche 9-13, **dadurch gekennzeichnet, dass** zumindest zwei Bodenstützflächen (171"') unterschiedliche Winkel bezüglich einer oberen Ebene (PT) des Werkzeughalters definieren.

## Revendications

1. Insert de coupe en forme de L (23, 123, 123', 123", 123"', 223, 323, 423), comprenant un côté supérieur (25) sur une première patte de l'insert, le côté supérieur comprenant une pluralité d'arêtes de coupe (27), les arêtes de coupe étant disposées les unes après les autres dans une direction axiale longitudinale de l'insert et s'étendant globalement perpendiculairement à un plan axial vertical longitudinal, et une paroi latérale (29, 129, 329, 429) formant une deuxième patte de l'insert et s'étendant vers le bas par rapport à un plan (P) du côté supérieur (25) de l'insert, la paroi latérale comprenant une surface de support latérale (37, 137, 237, 337, 437) destinée à supporter l'insert contre une surface de butée latérale (41, 141, 341, 441) d'un porte-outil (39, 139, 139', 130", 139"', 239, 339, 439) et une surface de fixation (51) destinée à être en contact avec une fixation (43) pour fixer la surface de support latérale (37) contre la surface de butée latérale (41, 141, 341, 441), la première patte de l'insert comprenant une surface de support inférieure (71, 71', 171', 171", 171"') destinée à supporter l'insert contre une surface de butée inférieure (69, 169', 169", 169"') d'un porte-outil, **caractérisé en ce que** la paroi latérale (29) est décalée vers un côté du plan axial vertical, en direction de la deuxième paroi latérale opposée (61) de la deuxième patte de l'insert.

2. Insert de coupe (23, 123, 123', 123", 123"') selon la revendication 1, **caractérisé en ce que** l'insert comprend au moins un trou traversant (53) s'étendant à travers la paroi latérale (29).

3. Insert de coupe (23, 123, 123', 123", 123"') selon la revendication 2, **caractérisé en ce que** la surface de fixation (51) est au moins partiellement disposée dans le trou traversant (53).

4. Insert de coupe (23, 123, 123', 123", 123"', 223, 323, 423) selon l'une quelconque des revendications 1 à 3, **caractérisé en ce que** la paroi latérale (29) est décalée pour être plus proche du plan axial vertical longitudinal de l'insert qu'une arête s'étendant axialement (81, 87) du côté supérieur (25).

5. Insert de coupe (23, 123, 123', 123", 123"', 223, 323, 423) selon l'une quelconque des revendications 1 à 4, **caractérisé en ce qu'**au moins deux des d'arêtes de coupe (27) ont des profils différents.

6. Insert de coupe (23, 123, 123', 123", 123"', 223, 323, 423) selon l'une quelconque des revendications 1 à 5, **caractérisé en ce que** les parties supérieures (89, 95) d'au moins deux des arêtes de coupe (27a, 27b) sont disposées à des distances différentes par rapport à une surface inférieure (31) de l'insert.

7. Insert de coupe (23, 123, 123', 123", 123"', 223, 323, 423) selon l'une quelconque des revendications 1 à 6, **caractérisé en ce que** les parties supérieures (89) d'au moins deux des arêtes de coupe (27a) sont disposées sur un premier rayon (R1) et les parties supérieures (95) d'au moins deux autres des arêtes de coupe (27b) sont disposées sur un deuxième rayon (R2).

8. Insert de coupe (23, 123, 123', 123", 123"', 223, 323, 423) selon l'une quelconque des revendications 1 à 7, **caractérisé en ce que**, pour chaque arête de coupe (27) de la pluralité d'arêtes de coupe, une surface d'inclinaison (33) s'étend globalement perpendiculairement au plan axial vertical longitudinal de l'insert et vers l'avant de chaque arête de coupe et chaque surface d'inclinaison définit un angle d'inclinaison (RA) avec le plan (P) du côté supérieur (25), et dans lequel au moins deux des surfaces d'inclinaison (33) définissent des angles d'inclinaison différents (RA) avec le plan (P) du côté supérieur (25).

9. Outils de coupe (21, 121) comprenant un insert de coupe en forme de L (23, 123, 123', 123", 123"', 223, 323, 423), selon l'une des revendications précédentes, l'insert comprenant un côté supérieur (25) comprenant une pluralité d'arêtes de coupe (27), les arêtes de coupe étant disposées les unes après les autres dans une direction axiale longitudinale de l'insert et s'étendant globalement perpendiculairement à un plan axial vertical longitudinal, et une paroi latérale (29, 129, 329, 429) s'étendant vers le bas par rapport à un plan (P) du côté supérieur (25) de l'insert, **caractérisé en ce que** la paroi latérale comprend une surface de support latérale (37, 137, 237, 337, 437), **en ce que** la paroi latérale (29) est décalée vers un côté du plan axial vertical, en direction de la deuxième paroi latérale opposée (61) de la deuxième patte de l'insert, et **en ce qu'**un porte-outil (39, 139, 139', 130", 139"', 239, 339, 439) est prévu, le porte-outil comprenant une surface de butée latérale (41, 141, 341, 441) contre laquelle la surface de support latérale (37, 137, 237, 337, 437) de l'insert est destinée à être supportée, et **en ce qu'**une fixation (43, 143) est prévue pour fixer la surface de support latérale (37, 137, 237, 337, 437) de l'insert contre la surface de butée latérale (41, 141, 341, 441) du porte-outil, et **en ce que** chaque insert (23, 123) comprend une paroi inférieure (31) comprenant une surface de support inférieure (71, 71', 171', 171", 171"') destinée à supporter l'insert contre une surface de butée inférieure (69, 169', 169", 169"') du porte-outil.

10. Outil de coupe (21, 121) selon la revendication 9, **caractérisé en ce que** la paroi latérale (29, 129) s'étend globalement parallèlement au plan axial vertical longitudinal de l'insert et la fixation (43, 143, 243) est destinée à appliquer une force de fixation dans une direction globalement perpendiculaire au plan axial vertical longitudinal de l'insert.

11. Outil de coupe (21, 121) selon l'une quelconque des revendications 9 et 10, **caractérisé en ce que** la surface de butée latérale (41, 141) s'étend globalement parallèlement à un plan axial vertical longitudinal du porte-outil.

12. Outil de coupe (21, 121) selon l'une quelconque des revendications 9 à 11, **caractérisé en ce que** la surface de butée latérale (341, 441) s'étend globalement perpendiculairement à un axe de rotation du porte-outil.

13. Outil de coupe (21, 121) selon l'une quelconque des revendications 9 à 12, **caractérisé en ce que** l'outil de coupe comprend une pluralité d'inserts (23, 123) montés contre une pluralité correspondante de surfaces de butée latérales (41, 141) dans une pluralité correspondante d'évidements (63, 163).

14. Outil de coupe (21, 121) selon l'une quelconque des revendications 9 à 13, **caractérisé en ce qu'**au moins deux des surfaces de support inférieures (171"') définissent des angles différents avec un plan supérieur (PT) du porte-outil.
